# EUROPÄISCHE PATENTSCHRIFT

(11) **EP 1 616 375 B1**
(45) Veröffentlichungstag und Bekanntmachung des Hinweises auf die Patenterteilung: **14.11.2007**
(21) Anmeldenummer: 05707589.7
(22) Anmeldetag: 23.02.2005
(51) Int. Cl.: H01S 3/06, H01S 3/081

(54) **FESTKÖRPERLASER**
SOLID BODY LASER
LASER A CORPS SOLIDE

(30) Priorität: 27.02.2004 DE 102004009593
(43) Veröffentlichungstag der Anmeldung: 18.01.2006
(73) Patentinhaber: Rofin-Sinar Laser GmbH, 22113 Hamburg (DE)
(72) Erfinder: LUDEWIGT, Klaus, Dr., 21033 Hamburg (DE); GRUNDMANN, Frank-Peter, 20357 Hamburg (DE)
(74) Vertreter: Mörtel & Höfner
(86) Internationale Anmeldenummer: PCT/EP2005/001869
(87) Internationale Veröffentlichungsnummer: WO 2005/083853

(56) Entgegenhaltungen:
- EP-A- 0 831 567
- WO-A-01/43242
- US-A- 5 131 002
- US-A1- 2003 058 915
- US-B1- 6 363 090
- BRUNNER F ET AL: "WIDELY TUNABLE PULSE DURATIONS FROM A PASSIVELY MODE-LOCKED THIN-DISK YB:YAG LASER" OPTICS LETTERS, OPTICAL SOCIETY OF AMERICA, WASHINGTON, US, Bd. 26, Nr. 6, 15. März 2001 (2001-03-15), Seiten 379-381, XP001020252 ISSN: 0146-9592

## Beschreibung

Die Erfindung bezieht sich auf einen Festkörperlaser, bei dem als laseraktives Medium eine dünne Kristallscheibe verwendet wird.

Ein solcher Festkörperlaser, in der Literatur auch als Scheibenlaser bezeichnet, ist beispielsweise aus der US 5,553,088 A und der DE 199 39 774 C2 bekannt und enthält als laseraktives Medium eine dünne, nur wenige Zehntelmillimeter bis wenige Millimeter dicke und typisch einen Durchmesser im Größenordnungsbereich von etwa 10 mm aufweisende Kristallscheibe, die auf einer Flachseite mit einer reflektierenden Schicht und auf der gegenüberliegenden Flachseite mit einer antireflektierenden Schicht versehen ist.

Die von einem solchen Scheibenlaser erzeugte Laserausgangsleistung wird unter anderem bestimmt durch die in der Kristallscheibe absorbierte Leistung eines zum optischen Pumpen verwendeten Pumplichtstrahls. Zur Einkopplung des Pumplichtstrahls in die Kristallscheibe gibt es nun prinzipiell zwei Möglichkeiten. Der Pumplichtstrahl kann entweder an einer Flachseite der Kristallscheibe (longitudinal) oder an der Schmalseite (transversal oder radial) eingekoppelt werden. Je größer die Intensität des Pumplichtstrahls und je größer der von ihm angeregte Flächenbereich ist - bei einer transversalen Pumpanordnung ist dies die Gesamtfläche der Kristallscheibe und bei einer longitudinalen Pumpanordnung die vom Pumplichtstrahl beleuchtete Anregungsfläche - ,desto größer ist auch die extrahierbare Leistung.

Die maximale Pumpintensität ist jedoch begrenzt, da eine zu hohe Pumpintensität zu optischen Störungen oder zu einem Bruch der Kristallscheibe aufgrund zu hoher thermischer Belastung führen kann. Für einen Scheibenlaser mit einem Yb:YAG - Kristall liegt diese maximale Pumpintensität bei etwa 5 bis 10 kW/cm². Bei typischen Wirkungsgraden von 50% lässt sich somit eine Laserleistung von maximal 2,5 bis 5 kW/cm² erzielen. Eine Erhöhung der Laserleistung einer einzelnen Kristallscheibe ist somit nur durch eine Vergrößerung der genutzten Anregungsfläche möglich. Mit zunehmender Anregungsfläche erhöht sich jedoch für einen gegebenen Resonator die Anzahl der transversalen Moden und die Strahlqualität des Laserstrahls wird verschlechtert.

US 5 131 002 A offenbart einen Halbleiterlaser mit einem externen Resonator, einem Spiegel auf der einen Flachseite der aktiven Schicht und Pumplichtquellen, die die andere Flachseite der aktiven Schicht beleuchten. US 5 131 002 A offenbart zudem eine Resonatorspiegelanordnung, die einen teildurchlässigen Endspiegel und einen Feltspiegel umfasst, deren optische Achsen geneigt zur Mittenachse der aktiven Schicht verlaufen.

Der Erfindung liegt nun die Aufgabe zugrunde, einen Festkörperlaser mit einer dünnen Kristallscheibe als laseraktivem Medium anzugeben, mit dem ein Laserstrahl hoher Leistung bei zugleich guter Strahlqualität erzeugt werden kann.

Die genannte Aufgabe wird gelöst mit einem Festkörperlaser mit den Merkmalen des Patentanspruches 1. Ein solcher Festkörperlaser enthält als laseraktives Medium eine Kristallscheibe, deren eine Flachseite totalreflektierend ist, sowie eine der Kristallscheibe zugeordnete Resonatorspiegelanordnung, die einen teildurchlässigen Auskoppelspiegel und zumindest einen Faltspiegel umfasst, die räumlich getrennt von der Kristallscheibe angeordnet sind, und deren optische Achsen geneigt zur Mittenachse der Kristallscheibe derart verlaufen, dass der sich innerhalb der Resonatorspiegelanordnung ausbreitende

Laserstrahl auf den oder die Faltspiegel unter einem schiefen Winkel auftrifft. Durch diese schiefwinklige Anordnung des zumindest einen externen Faltspiegels wird die Anregungsfläche entsprechend der Anzahl der in der Resonatorspiegelanordnung verwendeten Spiegel in kleinere Teilflächen oder Segmente unterteilt, die der erzeugte Laserstrahl der Reihe nach durchläuft. Dadurch werden die Abmessungen des Laserstrahls reduziert und seine Strahlqualität entsprechend erhöht. Da außerdem die Kristallscheibe bei jedem Umlauf des Laserstrahls im Resonator mehrfach durchlaufen und die Verstärkung vervielfacht wird, ist es insbesondere bei der Verwendung von Kristallscheiben mit relativ geringer Verstärkung, wie es beispielsweise bei einem Yb:YAG-Kristall der Fall ist, möglich, in den Resonator ein Zusatzelement, beispielsweise eine Brewster-Platte zur Polarisation oder einen akustooptischer Kristall als Schalter für den Pulsbetrieb einzubauen, ohne dass sich die dadurch verursachten resonatorinternen Verluste empfindlich auf die Laserleistung auswirken. Ein solches Zusatzelement wird insbesondere an einer Stelle angeordnet, die der Laserstrahl in einem halben Umlauf nur einmal durchläuft.

Als Faltspiegel sind in der Anmeldung optische Elemente bezeichnet, die die Fortpflanzungsrichtung eines auf sie auftreffenden Lichtstrahls durch Reflexion ändern. In diesem Sinne kann ein Faltspiegel auch aus einer Mehrzahl von spiegelnden Flächen, beispielsweise in Form eines Umlenkprismas aufgebaut sein. Die optische Achse einer solchen aus einer Mehrzahl von spiegelnder Flächen aufgebauten Spiegelanordnung ist dann diejenige Achse, bei der ein sich entlang dieser Achse ausbreitender Lichtstrahl in sich selbst zurückreflektiert, also um 180° reflektiert wird.

Weitere vorteilhafte Ausgestaltungen der Erfindung ergeben sich gemäß der Unteransprüche.

Zur weiteren Erläuterung der Erfindung wird auf die Ausführungsbeispiele der Zeichnung verwiesen. Es zeigen:
- Fig. 1 und 2: einen Festkörperlaser gemäß der Erfindung in einer schematischen Seitenansicht bzw. einer ebenfalls schematischen perspektivischen Darstellung,
- Fig. 3: eine weitere Ausführungsform eines Festkörperlaser gemäß der Erfindung in einer ebenfalls schematischen perspektivischen Darstellung,
- Fig. 4: eine weitere beispielhafte Resonatorspiegelanordnung in einer Prinzipdarstellung.

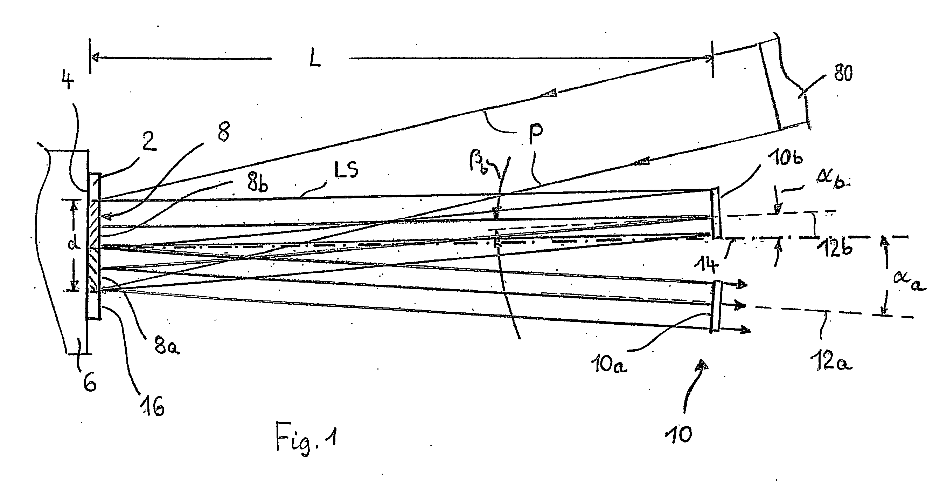

Gemäß Fig. 1 enthält ein Festkörperlaser eine Kristallscheibe 2 als laseraktives Medium, die mit einer Flachseite 4 auf einem in der Figur nur schematisch angedeuteten Kühlelement 6 angeordnet ist. Die dem Kühlelement 6 zugewandte Flachseite 4 ist mit einer totalreflektierenden Schicht versehen. Die Kristallscheibe 2 wird longitudinal von einem Pumplichtstrahl P auf einer Anregungsfläche 8 bestrahlt, deren geometrische Form und Ausdehnung durch die Querschnittsform des von einer Pumplichtquelle 80 erzeugten Pumplichtstrahls P bestimmt ist, so dass der schraffiert eingezeichnete Volumenbereich aktiv genutzt wird.

Der Kristallscheibe 2 ist eine externe Resonatorspiegelanordnung 10 zugeordnet, die im Ausführungsbeispiel aus einem teildurchlässigen Auskoppelspiegel 10a sowie einem Faltspiegel 10b besteht. Die Auskoppelspiegel 10a und der Faltspiegel 10b sind mit ihren Normalen oder im Falle der Verwendung gekrümmter Spiegelflächen mit ihren optischen Achsen 12a bzw. b um den Winkel αₐ bzw. α_{b} geneigt zur Mittenächse 14 der Kristallscheibe 2 angeordnet und zerlegen die Anregungsfläche 8 in zwei Teilflächen 8a bzw. b. Im Ausführungsbeispiel dient die totalreflektierende Flachseite 4 der Kristallscheibe 2 zugleich als Endspiegel und als Faltspiegel. Ein von einem beliebigen Punkt der Teilfläche 8b ausgehender und sich parallel zur Mittenachse 14 ausbreitender Laserstrahl LS trifft auf den Faltspiegel 10b und wird von diesem auf die Teilfläche 8a projiziert. Der an der Teilfläche 8a reflektierte Laserstrahl LS wird zum Auskoppelspiegel 10a reflektiert, auf den er senkrecht auftrifft und teilweise in sich selbst reflektiert wird. Der Faltspiegel 10b dient somit zur optischen Kopplung der Teilflächen 8a und 8b.

Die vom Kühlelement 6 abgewandte, und vom Pumplichtstrahl P bestrahlte Flachseite 16 der Kristallscheibe 2 kann ebenso wie die externen Spiegel der Resonatoranordnung gekrümmt sein.

Die optische Achse 12a des Auskoppelspiegels 10a ist gegen die Mittenachse 14 um einen Winkel αₐ = d/2L (L >> d) geneigt, wenn d die Ausdehnung der Anregungsfläche 8 in der Faltebene ist, die in der Figur parallel zur Zeichenebene verläuft, und L die Länge eines Arms des Resonators ist. Entsprechend ist die optische Achse 12b des Faltspiegels 10b um den Winkel α_{b} = αₐ/2 gegen die Mittenachse 14 geneigt angeordnet. Damit der Laserstrahl LS durch den Faltspiegel 10b auf ein anderes Teilgebiet 8a bzw. 8b umgelenkt wird, ist es erforderlich, dass der Laserstrahl LS auf den Faltspiegel unter einem von 90° verschiedenen Winkel β_{b} auftrifft, der im Ausführungsbeispiel α_{b/}2 beträgt.

Im Ausführungsbeispiel sind die Teilflächen 8a, b räumlich voneinander getrennt, d. h. sie überlappen sich nicht, sondern grenzen lediglich aneinander. Grundsätzlich sind jedoch auch Spiegelanordnungen möglich, bei denen sich die Teilgebiete teilweise überlappen.

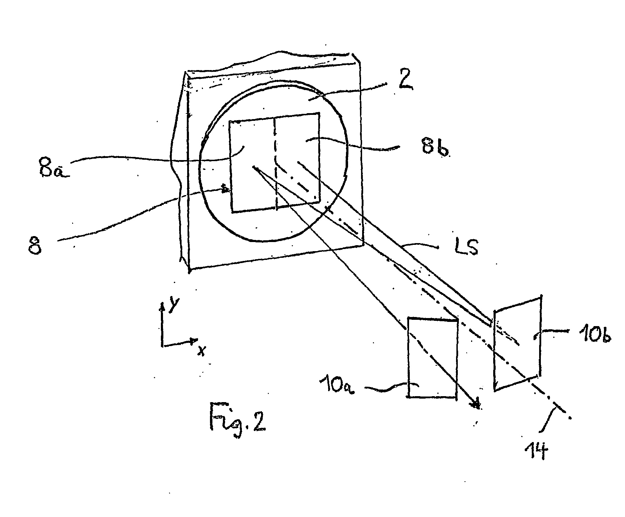

Gemäß Fig. 2 ist die Anregungsfläche 8 quadratisch. Diese Strahlform ist verursacht durch die Verwendung eines aus mehreren gestapelten Diodenlaserbarren aufgebauten Diodenlasers als Pumplichtquelle, bei dem die einzelnen, aus dem Diodenlaserbarren austretenden Laserstrahlen ein rechteckiges Strahlprofil aufweisen, das durch geometrische Strahlformung in ein quadratisches Strahlprofil mit annähernd gleicher Strahlqualität in zueinander orthogonalen Achsen (DE 198 46 532 C2) umgewandelt wird. Durch den Auskoppelspiegel 10a und den Faltspiegel 10b wird die quadratische Anregungsfläche 8 in zwei rechteckige, ohne Spalt aneinander grenzende Teilflächen 8a, b aufgeteilt, die die gesamte Anregungsfläche 8 überdecken. In Richtung der x-Achse wird durch die Halbierung des Strahlquerschnitts die Strahlqualität des Laserstrahls LS gegenüber einem konventionellen Resonatoraufbau verbessert.

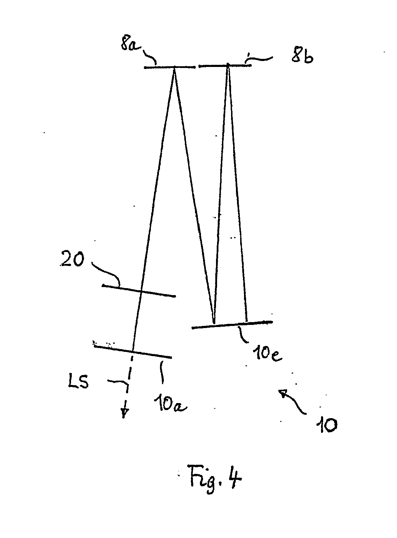

Bei der besonders bevorzugten Ausgestaltung gemäß Fig. 3 wird durch die Verwendung von drei Faltspiegeln 10b - d eine Segmentierung der quadratischen Anregungsfläche in vier ebenfalls quadratische Teilflächen 8a - d erreicht. Der Auskoppelspiegel 10a und die Faltspiegel 10b - d sind derart angeordnet, dass ein an der Teilfläche 8b senkrecht zur Oberfläche der Teilfläche 8b (parallel zur Mittenachse 14) startender Laserstrahl LS vom Faltspiegel 10b zur diagonal gegenüberliegenden Teilfläche 8c umgelenkt wird. Dort wird er zum Faltspiegel 10c reflektiert, der ihn auf die Teilfläche 8d umlenkt. Der an dieser Teilfläche 8d reflektierte Laserstrahl gelangt über den Faltspiegel 10d und die Teilfläche 8a zum Auskoppelspiegel 10a, auf den er senkrecht auftrifft. Auch in diesem Ausführungsbeispiel koppeln die Faltspiegel 10b - d jeweils zwei räumlich voneinander getrennten Teilflächen optisch miteinander (Faltspiegel 10b die Teilflächen 8b und 8c, Faltspiegel 10c die Teilflächen 8c und 8d und Faltspiegel 10d die Teilflächen 8d und 8a).

In dieser Anordnung sind die Querabmessungen des Laserstrahls LS sowohl in x-Richtung als auch in γ-Richtung halbiert, so dass sich die Strahlqualität in beiden Richtung zumindest annähernd im gleichen Ausmaß verbessert.

In der Figur ist der Aufbau nur schematisch dargestellt. Um einen platzsparenden und fertigungstechnisch einfachen Aufbau zu ermöglichen, ist es günstig, die Faltspiegel 10b-d auf einem gemeinsamen Substrat anzuordnen.

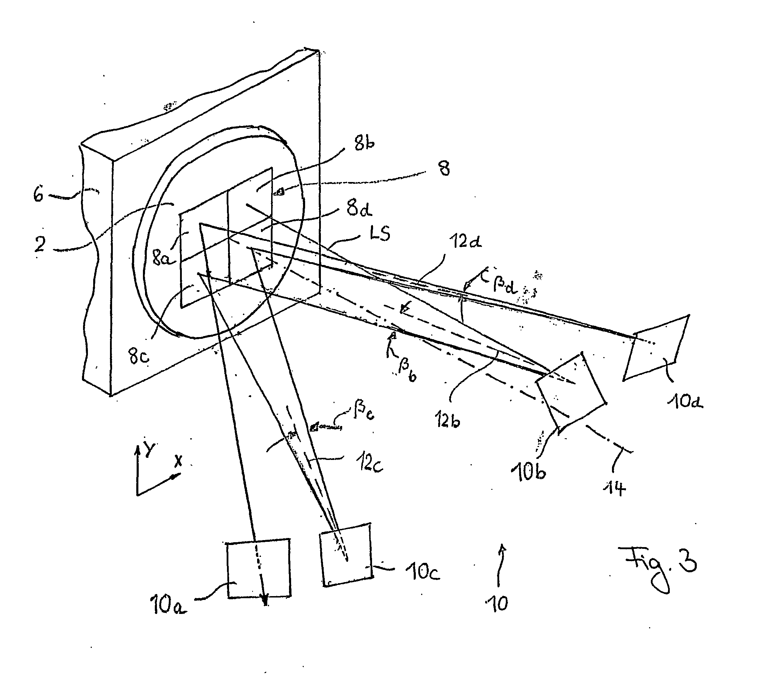

Im Ausführungsbeispiel gemäß Fig. 4 ist eine Resonatorspiegelanordnung 10 veranschaulicht, bei der nicht die totalreflektierende Flachseite 4 der Kristallscheibe 2 als Endspiegel wirkt, sondern bei der ein externer Endspiegel 10e Verwendung findet. In dieser Resonatorspiegelanordnung 10 wirkt dieser externe Endspiegel 10e zugleich als Faltspiegel, und wird bei jedem halben Umlauf des Laserstrahls LS im Resonator zweimal getroffen. Innerhalb des von der Kristallscheibe 2 und der Resonatorspiegelanordnung 10 gebildeten Resonators ist vor dem Auskoppelspiegel 10a ein optisches Zusatzelement 20, beispielsweise eine Brewster-Platte oder ein akustooptischer Kristall angeordnet, mit dem die Eigenschaften des Laserstrahls beeinflusst werden können.

Die Erfindung ist nicht auf Anordnungen mit einem oder drei Faltspiegeln beschränkt. Es sind auch Faltspiegelanordnungen möglich, die bewirken, dass der Laserstrahl bei einem halben Umlauf mehrmals auf eine Teilfläche trifft. Ebenso kann die Anregungsfläche 8 anstelle einer quadratischen auch eine andere, beispielsweise kreisrunde Form aufweisen.

## Patentansprüche

1. Festkörperlaser mit einer Kristallscheibe (2) als aktivem Medium, deren eine Flachseite (4) totalreflektierend ist,
mit einer Pumplichtquelle (80) zum Erzeugen eines Pumplichtstrahls (P), der eine Anregungsfläche (8) auf der der totalreflektierenden Flachseite (4) gegenüberliegenden Flachseite (16) der Kristallscheibe (2) beleuchtet und
mit einer Resonatorspiegelanordnung (10), die einen teildurchlässigen Endspiegel (10a) und zumindest einen Faltspiegel (10b - d) umfasst, die räumlich getrennt von der Kristallscheibe (2) angeordnet sind, und deren optische Achsen (12a bzw. 12b - d) geneigt zur Mittenachse der Kristallscheibe (2) verlaufen,
**dadurch gekennzeichnet, dass**
der sich innerhalb der Resonatorspiegelanordnung (10) ausbreitende Laserstrahl (LS) auf den oder die Faltspiegel (10b - d) unter einem schiefen Winkel (β_{b} - β_{d}) auftrifft, wobei die schiefwinklige Anordnung des zumindest einen Faltspiegels (10b - d) die Anregungsfläche (8) entsprechend der Anzahl der in der Resonatorspiegelanordnung (10) verwendeten Spiegel in kleinere Teilflächen oder Segmente (8a - d) unterteilt, die der erzeugte Laserstrahl (LS) der Reihe nach durchläuft, sodass der oder die Faltspiegel (10b - d) jeweils paarweise einander zugeordnete Teilflächen (8a - d) der Anregungsfläche (8) miteinander optisch koppeln.

2. Festkörperlaser nach Anspruch 1, bei der die Teilflächen (8a - d) räumlich voneinander getrennt sind.

3. Festkörperlaser nach Anspruch 1 oder 2, bei dem die Teilflächen (8a - d) die Anregungsfläche (8) vollständig überdecken.

4. Festkörperlaser nach einem der Ansprüche 1 bis 3, bei dem die Anregungsfläche (8) quadratisch ist.

5. Festkörperlaser nach einem der vorhergehenden Ansprüche, bei dem die totalreflektierende Flachseite (4) der Kristallscheibe (2) zugleich als totalreflektierender Endspiegel dient.

6. Festkörperlaser nach einem der vorhergehenden Ansprüche, bei dem innerhalb des von der Kristallscheibe (2) und der Resonatoranordnung (10) gebildeten Resonators ein optisches Zusatzelement (20) zum Beeinflussen der Eigenschaften des Laserstrahls (LS) angeordnet ist.

## Claims

1. Solid state laser having a crystal wafer (2) as the active medium, one flat side (4) of which is totally reflective, having a pump light source (80) for generating a pump light beam (P) which illuminates an excitation surface (8) on the flat side (16) of the crystal wafer (2) opposite the totally reflective flat side (4) and having a resonator mirror arrangement (10) which comprises a semitransparent end mirror (10a) and at least one folding mirror (10b - d), which are spatially separated from the crystal wafer (2) and whose optical axes (12a and 12b - d, respectively) are inclined with respect to the mid-axis of the crystal wafer (2), **characterized in that** the laser beam (LS) propagating inside the resonator mirror arrangement (10) strikes the folding mirror or mirrors (10b - d) at an oblique angle (β_{b} - β_{d}), wherein the obliquely angled arrangement of the at least one folding mirror (1Ob - d) subdividing the excitation surface (8) according to the number of mirrors used in the resonator mirror arrangement (10) into smaller sub-surfaces or segments (8a - d), through which the generated laser beam (LS) passes in succession such that the folding mirror or mirrors (10b - d) optically couple together sub-surfaces (8a - d) of the excitation surface (8) which are respectively assigned to one another pairwise.

2. Solid state laser according to Claim 1, wherein the sub-surfaces (8a - d) are spatially separated from one another.

3. Solid state laser according to Claim 1 or 2, wherein the sub-surfaces (8a - d) fully cover the excitation surface (8).

4. Solid state laser according to one of Claims 1 to 3, wherein the excitation surface (8) is square.

5. Solid state laser according to one of the preceding claims, wherein the totally reflective flat side (4) of the crystal wafer (2) is also used as a totally reflective end mirror.

6. Solid state laser according to one of the preceding claims, wherein an auxiliary optical element (20) for influencing the properties of the laser beam (LS) is arranged inside the resonator formed by the crystal wafer (2) and the resonator arrangement (10).

## Revendications

1. Laser solide comprenant un disque (2) en cristal comme milieu actif, dont l'une des faces (4) planes est totalement réfléchissante,
comprenant une source (80) de lumière de pompage pour la production d'un faisceau (P) de lumière de pompage qui éclaire une surface (8) d'excitation sur la face (16) plane du disque (2) en cristal opposée à la face (4) plane totalement réfléchissante, et
comprenant un dispositif (10) à miroir formant résonateur qui comporte un miroir (10a) d'extrémité partiellement transparent et au moins un miroir (10b-d) plié qui sont disposés dans l'espace séparés du disque (2) en cristal, et dont les axes (12a et 12b-d) optiques sont inclinés par rapport à l'axe médian du disque (2) en cristal,
**caractérisé en ce que**
le faisceau (LS) laser se propageant au sein du dispositif (10) à miroir formant résonateur arrive sur le ou les miroirs (10b-d) pliés sous un angle (β_{b}-β_{d}) incliné, dans lequel la disposition suivant un angle incliné du au moins un miroir (10b-d) plié subdivise la surface (8) d'excitation en fonction du nombre des miroirs utilisés dans le dispositif (10) à miroir formant résonateur en des sous-surfaces ou segments (8a-d) plus petits, segments que le faisceau (LS) laser produit traverse successivement, de sorte que le ou les miroirs (10b-d) pliés couplent optiquement entre elles des sous-surfaces. (8a-d) de la surface (8) d'excitation, associées respectivement par paires.

2. Laser solide suivant la revendication 1, dans lequel les sous-surfaces (8a-d) sont séparées les unes des autres dans l'espace.

3. Laser solide suivant la revendication 1 ou 2, dans lequel les sous-surfaces (8a-d) recouvrent complètement la surface (8) d'excitation.

4. Laser solide suivant l'une des revendications 1 à 3, dans lequel la surface (8) d'excitation est carrée.

5. Laser solide suivant l'une des revendications précédentes, dans lequel la face (4) plane totalement réfléchissante du disque (2) en cristal sert en même temps de miroir d'extrémité totalement réfléchissant.

6. Laser solide suivant l'une des revendications précédentes, dans lequel, dans le résonateur formé par le disque (2) en cristal et le dispositif (10) formant résonateur, est disposé un élément (20) optique supplémentaire pour influer sur les propriétés du faisceau (LS) laser.
